# EUROPEAN PATENT SPECIFICATION

(11) **EP 0 353 677 B1**
(45) Date of publication and mention of the grant of the patent: **05.04.1995**
(21) Application number: 89114070.9
(22) Date of filing: 29.07.1989
(51) Int. Cl.: B32B 27/08, C09J 133/06, E06B 7/28

(54) **A plastics plate and an adhesive film therefor**
Kunststoffplatte und dafür geeigneter Klebefilm
Plaque de matière plastique et film adhésif à cet effet

(30) Priority: 04.08.1988 JP 194821/88; 23.08.1988 JP 209062/88
(43) Date of publication of application: 07.02.1990
(73) Proprietor: LINTEC Corporation, Tokyo (JP)
(72) Inventor: Maruoka, Shigenobu, Kawasaki-shi Kanagawa-ken (JP); Tsuchida, Ichiro, Koshigaya-shi Saitama-ken (JP); Saito, Takanori, Ohmiya-shi Saitama-ken (JP)
(74) Representative: Türk, Gille, Hrabal, Leifert

(56) References cited:
- EP-A- 0 104 046
- EP-A- 0 304 779
- WO-A-86/02038
- DE-A- 2 516 630
- GB-A- 2 048 167
- US-A- 3 617 362
- US-A- 4 551 388

## Description

### BACKGROUND OF THE INVENTION

### 1.Field of the invention

The present invention relates to a novel plate material made of plastics and to a novel window pane material made of plastics, both of which are prepared by applying and bonding an adhesive plastics film to a surface of a plastics base plate or of a plastics base window pane, wherein the adhesive plastics film has a function of protection of the surface against scratches and selective transmission of light, and is free from occurrence of blisters in the adhesive layer even after a prolonged service period.

All kinds of the functions which the pressure-sensitive adhesive film can have are easily furnished to the plate material or to the window pane material. Examples of such functions are: resistance to scratches on a surface, control of sun light transmission, polarization of light, phase conversion of light, antistatic property, and electric conductivity.

More paticularly, the present invention relates, firstly, to a scratch resistant plastics plate prepared by utilizing an adhesive functional film which is useful for the improvement of scratch resistance of a plastics plate and prepared by application of a blister-free adhesive composition to the inner surface of a face-stock plastic film finished with a hard coating on the outer surface and, secondly to a plastics window pane material having the function of control of sun light transmission and prepared by utilizing an adhesive functional film which is useful for the control of sunlight transmission by partially impeding sun light transmission and prepared by application of a blister-free adhesive composition to the inner surface of a face-stock plastic film having said function.

### 2.Prior art

In general, plastics plates are utilized in large amounts in various applications because they are advantageous for use in that they have lower price, lighter weight, excellent processability and excellent impact resistance.

Various functional properties are required to plastics plates depending upon applications. One of the most efficient methods to furnish functional properties to a plastics plate is to apply and bond a thin film having the desired functional properties to the surface of the plastics plate.

For example, thermoplastics have the surface of lower hardness and easily damaged by scratching. In other words, a serious problem for them is that they are inferior in the scratch resistance. A frequently applied method to solve this problem is coating of a material having a higher hardness to the surface of the plastics.

According to an ordinarily utilized method of hard coating, a material used for the hard coating is directly applied to the surface of a base plastics and then hardened, thus giving the plastics scratch resistance. This method, however, cannot be utilized for plastics materials that are eroded by the hard coating material itself or by solvents used. When hardening of the coating material requires a higher temperature, this method can be utilized only for a plastics having enough thermal stability above the hardening temperature. Furthermore, because the hard coating according to this method is applied to an individual molded article, it requires complicated procedures, takes a longer time and is hence economically disadvantageous.

As one of the possible means to solve this problem, a heat resistant and solvent resistant plastics face-stock film, such as polyester film or polyimide film is finished with the hard coating on one side and with an adhesive composition on the other side and this film is applied and bonded to the surface of a plastics through the adhesive layer, thus giving the plastics required scratch resistance. By utilizing this method a roll of the plastics face-stock film can be continuously finished with the hard coating and a desired plastics article is easily furnished with the hard coating merely by applying and bonding the film to the surface. This method has advantages that it is easy in processing and can be utilized for plastics having lower thermal stability or lower solvent resistance.

Adhesive films in general have a serious problem that, when an adhesive film is applied and bonded to the suface of an article made of a polystyrene resin or polycarbonate resin, so-called blisters are not rarely formed due to incomplete squeeze-out of the air between the substrate surface and adhesive film attached as a label, a protecting sheet or a functional sheet. This problem is unavoidable when the face-stock film of the adhesive sheet is made of a plastic resin having gas barrier property such as conventional polyester resins.

When blisters are caused in the adhesive film attached to the surface of an article as a sheet or a label, not only the article has a very unsightly appearance to decrease the commercial value but also the label and the like attached to the surface are liable to eventual falling. In a printed sheet or label made of a see-through adhesive film, in particular, it is unavoidable that the appearance is extremely poor because the layer of the adhesive coating exhibits a pockmarked or white and cloudy appearance through the face-stock film.

Plastics materials, such as acrylic resins or polycarbonate resins, are becoming extensively utilized as window panes of buildings and automobiles to replace glass because plastics materials are lighter in weight and better in impact resistance than glass.

Window panes are, depending upon the use, required to have a function of controlling the transmission of the sun light. Window pane materials which have the function of controlling the transmission of the sun light are desired for this object.

General methods of furnishing the function of controlling the transmission of the sun light can be listed as following:
(1) To stain a window pane material with a suitable color.
(2) To furnish a thin layer of metal to a surface of a window pane material.
(3) To apply and bond a colored thin film to a surface of a window pane material.
(4) To apply and bond a metallizing film to a surface of a window pane material.
(5) To apply and bond a colored film having, on a surface or within the film material, a substance which impedes the transmission of the light of specific wave lengths, such as ultraviolet light and infrared light.

Among these methods, methods (1) and (2) are disadvantageous because the control of sun light transmission must be made on individual window pane material and the application of the method is expensive.

Methods (3), (4) and (5) are advantageous in easiness of the processing and lower cost because the desired window pane material having the function of control of sun light transmission is obtained by merely applying and bonding a film having the desired function to a plastics substrate and, in turn, the film having the desired function is easily prepared by a roll to roll process.

All of the said methods (1) through (5) can be utilized for furnishing the function to a glass window pane without serious problem. Plastics window panes have, however, a serious problem when either one of the methods (3), (4) and (5) is utilized and a film having the function of control of sun light transmission is applied and bonded to a surface of the plastics window pane. The most generally utilized way of applying and bonding a film to a surface of a window pane material is to coat a surface of the film with a pressure-sensitive adhesive and bond the film to the window pane material with the adhesive layer. Pressure-sensitive adhesive films in general have a serious problem that, when the adhesive film is applied and bonded to the surface of an article made of acrylic resin or polycarbonate resin, so-called blisters are not rarely formed due to incomplete squeeze-out of the air between the substrate surface and adhesive film applied as a functional film. This problem is unavoidable when the face-stock film of the pressure-sensitive adhesive film is made of a plastic resin having gas barrier property such as conventional polyester resin.

When blisters are caused in an adhesive functional film applied to the surface of a window pane material, not only the window pane material has a very unsightly appearance to decrease the commercial value but also the functional film applied to the surface is liable to eventual falling. In a functional film used for a transparent plastics window pane material, in particular, it is unavoidable that the appearance is extremely poor because the layer of the adhesive coating exhibits a pockmarked or white and cloudy appearance through the face-stock film and the transparent plastic material. In a functional film used for optical recording devices such as optical disks and optical cards or for liquid crystal display elements, the occurrence of blisters in such a manner as described above is a deficiency fatal to the function of the devices or elements. The mechanism of this undesirable phenomenon is that the plastic film as the face-stock film of the pressure-sensitive adhesive sheet acts as a barrier against escape of the gas in a small volume occurring between the adherend and adhesive coating layer so that the gas retained there forms a number of gas-filled blisters.

One of the possible means to solve this problem by dissipating the gas in the blisters is to provide a gas-permeable layer made of paper, porous polyurethane between the face-stock film and the adhesive coating layer of the pressure-sensitive adhesive film. This method, however, has no general applicability because the overall thickness of the adhesive sheet is necessarily increased so much and the adhesive sheet can no longer be used to constitute a tranparent label or a functional window pane material controlling the transmission of the sun light due to the loss of transparency and also due to lack of capacity to exhibit the furnished optical functions by the interposed gas-permeable layer.

It is also known that the problem due to the formation of blisters in a pressure-sensitive adhesive sheet can be considerably decreased when a pressure-sensitive adhesive of a certain type is used for the adhesive coating layer. Examples of such a pressure-sensitive adhesive hitherto proposed include those rubber-based ones comprising a block copolymer of styrene-isoprene-styrene type or a block copolymer of styrene-butadiene-styrene type compounded in a specific formulation. Pressure-sensitive adhesive sheets having an adhesive coating layer of such a rubber-based adhesive are, however, not quite satisfactory for use because of the poor weatherability of the adhesive layer inherent in rubber-based pressure-sensitive adhesives.

EP-A-0 304 779 discloses pressure-sensitive adhesive sheets comprising A) a face-stock film and B) a pressure-sensitive adhesive composition and furthermore composite bodies comprising a moulded article of polycarbonate resin, styrene-based resin or acrylic resin and the pressure-sensitive adhesive sheet comprising A) and B). However, this document does not disclose a plate material or a window pane material wherein the face-stock plastics film has the function of protecting the surface of a base plate material against scratches.

EP-A-0 104 046 discloses pressure-sensitive adhesive compositions consisting of a polymer of certain monomers and a pressure-sensitive adhesive coated sheet material. The backing thereof can be formed of metallized polymeric film. This document, however, does not disclose a plate material made of plastics or a window pane material.

In GB-A-2 048 167 a transparent composite resin pane is described, which comprises a substrate pane, synthetic resin film provided with a scratch-resistant synthetic resin layer and a transparent adhesive resin layer between the substrate pane and the synthetic resin film. However, this resin pane is not free from the problem that blisters are frequently formed in the pane material.

### SUMMARY OF THE INVENTION

The present invention accordingly has an object to provide an improved blister-free plastics plate material and an plastics window pane material, wherein said plastics plate material and said plastics window pane material are furnished with a desired function by applying and bonding an adhesive film having the desired function to the surface of a plastics substrate.

The improved blister-free plastics plate material and the plastics window pane material in the present invention are free from the above described problems and disadvantages in the conventional plastics articles and adhesive films utilized for them. They have excellent characteristics that the adhesive layer included in them is highly resistant against weathering with excellent retention of adhesiveness, that formation of blisters can effectively be prevented when the adhesive film is applied and bonded to the surface of a substrate even without providing the above mentioned gas-permeable layer between the substrate and the adhesive layer and that, as a result, the desired function of the plastics plate and the window pane is effectively and reliably retained.

Thus, the plate material made of plastics of the present invention comprises:
(A) a plastics base plate;
(B) a face-stock plastics film having the function of protecting the surface against scratches, which is prepared by finishing one surface with a coating material which is hardened by heat or by irradiation of ultraviolet light or electron beam; and
(C) a coating layer of a pressure-sensitive adhesive composition formed on the other surface of the face-stock film, the pressure-sensitive adhesive composition comprising, as the principal ingredient thereof, a copolymer having a weight-average molecular weight in the range from 150,000 to 2,000,000 and a glass transition temperature in the range from -60°C to +60°C and composed of (a) from 50 to 85 percent by weight of a first monomeric moiety of an acrylic ester, (b) from 1 to 30 percent by weight of a second monomeric moiety of an acrylic compound having a polar group in the molecular structure and (c) from 5 to 40 percent by weight of a third monomeric moiety of a macromonomer compound having a polymeric molecular chain and polymerizable functional group at the molecular chain end, the weight ratio of the second monomeric moiety to the third monomeric moiety being in the range from 0.02 to 6.

The window pane material made of plastics of the present invention comprises:
(A) a plastics base window pane;
(B) a face-stock plastics film having the function of protecting the surface against scratches, which is prepared by finishing one surface with a coating material which is hardened by heat or by irradiation of ultraviolet light or electron beam; and
(C) a coating layer of a pressure-sensitive adhesive composition formed on the other surface of the face-stock film, the pressure-sensitive adhesive composition comprising, as the principal ingredient thereof, a copolymer having a weight-average molecular weight in the range from 150,000 to 2,000,000 and a glass transition temperature in the range from -60°C to +60°C and composed of (a) from 50 to 85 percent by weight of a first monomeric moiety of an acrylic ester, (b) from 1 to 30 percent by weight of a second monomeric moiety of an acrylic compound having a polar group in the molecular structure and (c) from 5 to 40 percent by weight of a third monomeric moiety of a macromonomer compound having a polymeric molecular chain and polymerizable functional group at the molecular chain end, the weight ratio of the second monomeric moiety to the third monomeric moiety being in the range from 0.02 to 6.

### DETAILED DESCRIPTION OF THE PREFERRED EMBODIMENTS

As is described above, the most characteristic feature of the inventive plastics plate material and plastics window pane material consists in the very unique pressure-sensitive adhesive composition forming the coating layer on the face-stock film (B) and comprising, as the principal ingredient, a copolymer having a specified molecular weight and a specified glass transition temperature and composed of three types of monomeric moieties each in a specified weight fraction. The invention has been completed as a result of the extensive investigations undertaken with an object to develop a plastics plate material and a plastics window pane material free from the disadvantage of blisters leading to a discovery that the polymeric molecular chain of the moiety of the macromonomer introduced into the copolymer as the pendant groups may act to absorb any trace volume of gases emitted from inside of the resinous substrate and responsible for the formation of blisters so that the formation of blisters can be efficiently prevented and the plastics plate and the plastics window pane can exhibit excellent function to achieve the above described object of the present invention.

The plastic plate material and plastic window pane material of the present invention basically have a structure in which a coating layer of a pressure-sensitive adhesive composition is provided on the surface of a face-stock film having the function of protecting the surface against scratches, and additionally selective transmission of light and the face-stock film and the adhesive composition combined are applied and bonded to the surface of a plastics base plate or of a plastics base window pane. The principal ingredient of the pressure-sensitive adhesive composition is a copolymer of (a) a first monomeric moiety of an acrylic ester, (b) a second monomeric moiety of an acrylic compound having a polar group in the molecular structure and (c) a third monomeric moiety of a macromonomer compound having a polymeric molecular chain and a polymerizable functional group at the molecular chain end.

The first monomeric moiety (a) of an acrylic ester is exemplified by the moieties of alkyl esters of acrylic acid or methacrylic acid of which the alkyl group has 1 to 14 carbon atoms. Examples of the acrylic ester monomers from which the first monomeric moiety is derived include esters of acrylic or methacrylic acid with an alcohol having 1 to 14 carbon atoms in a molecule such as methyl alcohol, ethyl alcohol, n-propyl alcohol, isopropyl alcohol, n-butyl alcohol, isobutyl alcohol, n-pentyl alcohol, pentan-2-ol, pentan-3-ol, 2-methyl butan-1-ol, 3-methyl butan-1-ol, 1-methyl-1-pentanol, 2-methyl pentan-1-ol, 3-methyl pentan-1-ol, 2-ethyl butan-1-ol, 3,5,5-trimethyl hexan-1-ol, heptan-3-ol, 2-ethyl hexan-1-ol, n-decyl alcohol, or n-dodecyl alcohol, of which n-butyl acrylate and 2-ethyl hexyl acrylate are preferred. These acrylic ester monomers can be used either singly or as a combination of two kinds or more according to need.

The second monomeric moiety (b) is derived from an acrylic compound having a polar group in the molecular structure. The polar group here implied includes carboxyl group, hydroxy group, amino group, amido group, epoxy group, cyano group, isocyanato group. The acrylic compound may have two kinds or more of these polar groups in a molecule. Examples of the acrylic compound having a polar group include (meth)acrylic acid, 2-hydroxyethyl (meth)acrylate, 2-aminoethyl (meth)acrylate, (meth)acrylamide, glycidyl (meth)acrylate, (meth)acrylonitrile, 2-isocyanoethyl (meth)acrylate, itaconic acid, and maleic acid. When these acrylic compounds are polymerized, the polar group or groups should be the pendant groups to the polymeric molecular chain. These acrylic monomers having a polar group or groups can be used either singly or as a combination of two kinds or more according to need.

The third moiety (c) is derived from a macromonomer and has a polymeric chain and a polymerizable functional group at the molecular chain end. The polymeric chain is composed of the moiety of styrene, methyl methacrylate or a copolymeric moiety of styrene or methyl methacrylate with acrylonitrile or vinyl acetate in which acrylonitrile or vinyl acetate constitutes 50 mole percent or less of the copolymer. The polymeric chain preferably has a molecular weight in the range from 1000 to 30,000 and a glass transition temperature of 30°C or higher. The polymerizable functional group is not particularly limited insofar as it can be copolymerized with the above described acrylic ester monomer and the polar acrylic monomer. Examples of suitable copolymerizable functional group include methacryloyl group, allyl group, vinyl benzyl group.

When the macromonomer having a polymeric chain and copolymerizable functional group at the molecular chain end is copolymerized with the above described acrylic ester monomer and the polar acrylic monomer, the copolymer thus obtained is a graft copolymer having the polymeric chains of the macromonomer as the pendant groups to the polymeric main chain.

The above mentioned macromonomer can be prepared by a variety of known methods without particular limitations. Applicable methods include, firstly, a method in which methacryloyl chloride or the like is reacted with living polymer anions prepared in advance for forming the polymeric chain portion of the macromonomer, secondly, a method in which an oligomer having carboxyl groups at the molecular chain terminals is prepared by the oligomerization of a radical-polymerizable monomer such as methyl methacrylate in the presence of mercapto-acetic acid as a chain transfer agent and the oligomer is then converted into a macromonomer by the reaction with glycidyl methacrylate, thirdly, a method in which an oligomer having hydroxy groups at the molecular chain ends is prepared by using 2-mercaptoethyl alcohol as a chain transfer agent and then the oligomer is converted into a macromonomer by the reaction with 2-hydroxyethyl methacrylate, fourthly, a method in which an acrylic monomer is radical-polymerized by using a mercaptan-based chain transfer agent containing a polymerizable functional group, fifthly, a method in which a vinyl monomer having carbonyl group or cyano group is polymerized by ionic polymerization by using vinyl phenyl ketene methyl trimethylsilyl acetal as a polymerization initiator and a fluorine compound as a co-catalyst.

It is essential in the present invention that the above described copolymer is composed of the three types of the monomeric moieties each in a specific weight fraction such that the weight fractions of the first monomeric moiety (a) of the acrylic ester, the second monomeric moiety (b) of the polar acrylic monomer and the third monomeric moiety (c) of the macromonomer are in the range from 50 to 85 percent by weight, from 1 to 30 percent by weight and from 5 to 40 percent by weight, respectively, with the proviso that the weight ratio of the second monomeric moiety (b) to the third monomeric moiety (c) is in the range from 0.02 to 6. When the weight fraction of each of the three monomeric moieties is outside of the above mentioned range, the copolymer is not sufficiently effective to prevent blistering of the pressure sensitive adhesive film or cannot exhibit high adhesive performance.

The copolymer used in the adhesive film of the inventive plastics plate material and window pane material should have a weight-average molecular weight in the range from 150,000 to 2,000,000 or, preferably, from 250,000 to 1,500,000 or, more preferably, from 300,000 to 1,000,000. A weight-average molecular weight of the copolymer smaller than 150,000 is undesirable due to eventual poor holding power of adhesiveness of the copolymer. A weight-average molecular weight larger than 2,000,000, on the other hand, is also undesirable in respect of the poor workability in the coating.

In addition the copolymer should have a glass transition temperature in the range from -60°C to +60°C or, preferably, from -30°C to +20°C. When the glass transition temperature of the copolymer is lower than -60°C, the adhesive sheet hardly has a sufficiently high adhesive bond strength. When the glass transition temperature thereof exceeds +60°C, on the other hand, the ball-tack of the adhesive sheet may be decreased as a trend.

The copolymer used in the adhesive sheet of the inventive plastics plate material and window pane material can be prepared by any of known methods including the following three methods. Firstly, copolymerization of the three monomers is performed simultaneously by admixing a radical polymerization initiator such as azo-bis-isobutyronitrile with a mixture of an acrylic ester monomer, a polar acrylic monomer and a macromonomer having a polymeric molecular chain and polymerizable functional group at the molecular chain end to start the copolymerization reaction. Secondly, an acrylic ester monomer and a polar acrylic monomer having a reactive group such as a carboxyl group and hydroxy group are first copolymerized to give a copolymer having reactive groups at the pendant groups followed by the reaction thereof with macrosegments composed of polymeric molecular chain having a reactive group capable of being bonded with the above mentioned reactive groups in the copolymer such as an isocyanate group, hydroxy group, or carboxyl group. Thirdly, a monomer having a reactive group capable of initiating grafting reaction such as a polymerizable organic peroxide, an acrylic ester monomer and a polar acrylic monomer are copolymerized to give a copolymer which is then subjected to a graft-copolymerization reaction with a grafting monomer such as styrene, methyl methacrylate, acrylonitrile.

Although the above mentioned second and the third methods are performed without utilizing the copolymerization reaction of the acrylic ester monomer, polar acrylic monomer and marcromonomer, the copolymers obtained by these methods have a final structure identical with that of the copolymer prepared by the first method so that they can be used as the copolymer according to the present invention.

According to the results of the experiments undertaken by the inventors, the desired blister-preventing effect as the object of the present invention cannot be obtained when the above described copolymer is replaced with a copolymer prepared by the copolymerization of an ethylenically unsaturated monomer such as styrene, methyl methacrylate and the like with other monomers for the monomeric moieties (a) and (b) having the moiety of styrene or methyl methacrylate as the units forming the main chain of the copolymer or replaced with a polymer blend composed of a polymer such as polystyrene, or poly(methyl methacrylate) and a copolymer of an acrylic ester monomer and a polar acrylic monomer.

The above described facts suggest that a mechanism of the blister-preventing effect of the specific copolymer as the adhesive as follows. The polymeric molecular chains as the pendant groups form microdomains and the like in the copolymer and this microscopic structure with phase separation is presumably effective for absorption and diffusion of a small volume of gases emitted from the resinous substrate which otherwise may cause the formation of blisters in the adhesive sheet.

The face-stock plastics film of the present invention utilized with application of hard coating on one surface and application of an adhesive compound on the other side is required to have good thermal stability and good solvent resistance. Examples of such face-stock film are sheets and films of synthetic resins such as polyester, polypropylene, polyethylene, polyamide, polyimide, poly(phenylene sulfide), poly(methyl pentene), or polyether sulfone.

The hard coating may be applied to the face-stock film by utilizing methods such as continuous coating of hard coating material by the use of a suitable coating apparatus such as bar coater, roll coater, gravure coater and the like or batch coating of hard coating material by the use of a spin coater. Coating materials such as silane coating materials, acrylic coating materials and the like may be utilized for the hard coating. The applied coating material is hardened by heat or by irradiation of ultraviolet light or electron beam and a hard coated layer is formed on the surface of the face-stock film.

Thickness of the face-stock film which is utilized for the hard coating is generally in the range from 5»m to 200 »m, and preferably from 25»m to 75»m.

The type of the face-stock film having the function of selective transmission of light and having an adhesive compound on a surface is not particularly limitative including films and sheets of a synthetic resin such as polyester, poly(vinyl chloride), polypropylene, polyethylene, polycarbonate, poly(vinyl alcohol), or polyurethane, or cellulose-based films and sheets. If desired these face stock-films can be printed to exhibit suitable patterns such as characters and marks or coated with a scratch resistant hard layer on the surface not coated with the adhesive to meet the particular application.

A variety of methods can be utilized to furnish the function of selective transmission of light to a face-stock film. Applicable methods are, for example, addition of organic or inorganic pigments or dyes to the face-stock film material to make it colored or translucent; metallizing of the film; addition of substances impeding transmission of light of a specific wave length range, such as ultraviolet and infrared light, to the film material or coating of such substances on a surface of the film, stretching of the film to furnish the property of birefringence, adsorption of iodine or a dye to a stretched film to furnish the property of polarization. Among these methods, the method of metallizing of the film is most suitable for effectively controlling the transmission of the sun light. Examples of metals utilized for metallizing of the film are aluminum, chromium, or gold and examples of metal oxides utilized for metallizing are oxides of tin, silicon, indium, or zirconium. The method of vapor deposition of aluminum on the surface of the film is most suitable for controlling the transmission of the sun light because of lower cost and better workability. The metallized film can be prepared according to a method conventionally used for metallizing plastics films such as vacuum deposition, cathode sputtering, or ion plating.

Thickness of the film additionally having the function of control of sun light transmission is generally in the range from 5»m to 100»m and preferably in the range from 25»m to 75»m.

The adhesive film (B) + (C) having the function of selective transmission of the present invention utilized for the plastics window pane material can be prepared by coating a surface of the above described face-stock film (B) with the adhesive composition mainly composed of the copolymer obtained in the previously described manner according to a coating method conventionally used in the manufacture of adhesive sheets. It is optional according to need that the adhesive composition is admixed with aging retarders such as ultraviolet absorbers, antioxidants and the like to enhance the durability of the adhesive film.

The plastics base window pane utilized in the present invention is a transparent plastics material. The particularly suitable material for a base window pane is a polycarbonate resin plate, an acrylic resin plate such as a poly(methyl methacrylate) plate or a molded article of polystyrene resin or poly(4-methyl-pentene-1) having good transparency. When a conventional adhesive film is applied and bonded to a plastics base window pane for the purpose of control of sun light transmission, formation of blisters is particularly detrimental for the use of the article. Thus, the functional adhesive film of the present invention is particularly advantageous when it is applied to a molded article like a window pane material.

When a surface of the face-stock film is treated with metal deposition or color pigments, the adhesive is generally applied over the layer of deposition or coloring on the surface of the film and the film thus prepared is applied and bonded to a plastics article through this adhesive layer. Alternatively, the adhesive may be applied on the other surface of the face-stock film which is not treated with the metal deposition or color pigments, leaving the treated surface exposed to the surface of the window pane material.

A window pane material having both of the scratch resistance and the function of control of sun light transmission simultaneously is often required. This kind of requirement is easily satisfied by preparing an adhesive film having a plurality of functions by applying a hard coating to a surface of a face-stock film having the function of control of sun light transmission and then by applying and bonding the thus prepared face-stock adhesive film (B) + (C) to a surface of a plastics plate material.

The adhesive face-stock plastics film (B) + (C) can have a variety of functions in addition to the scratch resistance and selective transmission of light which are described above, such as electric conductivity, antistatic property and the like. When the adhesive face-stock film (B) + (C) is applied and bonded to a surface of a plastics base plate, a plate material having a variety of desired functions and free from occurrence of blisters is easily prepared.

Furnishing of the function to the film can be made by utilizing a variety of methods such as treatment of a surface with a suitable reagent, blending of an additive component into the material forming the film. These methods are, in general, much more easily performed for a film than for a molded article substrate while the required function is kept effective to the same degree. According to the method of the invention, mechanical properties of the article, such as strength, is retained unchanged because the bulk of the substrate remains unchanged.

A plastics material having good electric conductivity at a surface can be easily prepared by applying and bonding a film having good electric conductivity to the surface of the plastics material. A functional plastic plate material having electrical and optical functions simultaneously can be prepared by utilizing a transparent plastics material in the above method.

A face-stock film for the above mentioned adhesive film (B) + (C) having a good electric conductivity can be prepared by a variety of methods without particular limitations. Applicable methods include formation of a conductive layer on a surface of the film by utilizing vacuum deposition or sputtering of a metal, such as gold, silver, of an oxide of an element such as tin, indium and of an oxidation product of an alloy such as indium-tin alloy; application of a coating material comprising a substance having good electric conductivity such as a metal, carbon black, to a surface of the film; compounding of the above substance having good electric conductivity into the material forming the film.

The face-stock adhesive film (B) + (C) can be applied to a surface of a plastics plate substrate while water is sprayed in the same manner as the application to a surface of glass or, alternatively, applied by utilizing a laminator.

In the following, examples are given to illustrate the materials of the invention in more detail. Following are the procedures for testing of various properties described in the examples.

### (1) Viscosity

Viscosity of liquid sample was determined at 23°C by using a rotational viscometer (Model BM, manufactured by Tokyo Keiki Co.) with a No. 4 rotor rotated at 60 rpm. The values of viscosity are given in centipoise.

### (2) Molecular weight

Weight-average molecular weight M̅w was determined by the gel permeation chromatography using a chromatographic apparatus (Model CCP 8000, manufactured by Toso Co.) with tetrahydrofuran as the moving phase taking polystyrenes as the reference samples.

### (3) Glass transition temperature

Measurement was performed by the shearing method at 3.5 Hz by using Rheovibron (Model DDV-II-EP manufactured by Orientech Co.).

### (4) Adhesive bond strength

According to the method specified in JIS Z 0237, after 24 hours of bonding the adhesive sheet was peeled off by pulling at an angle of 180° and the force required for peeling was given in grams per 25 mm width of the sheet.

### (5) Holding power

Measurement was undertaken according to the method specified in JIS Z 0237 at 40°C with a load of 1 kg and the results were recorded by the time in seconds taken before falling.

### (6) Total light transmission and haze

Measurement was undertaken by using Haze-meter (Model HGM-2K manufactured by Suga Shikenki Co.).

### (7) Gloss

Measurement was undertaken by using Gloss-meter (Model VG-1D manufactured by Nippon Denshoku Kogyo Co.).

In the tables, following abridged notations are used for various monomers and polymers.
2EHA: 2-ethylhexyl acrylate
BA: butyl acrylate
AA: acrylic acid
HEMA: 2-hydroxyethyl methacrylate
AN-6: copolymer of styrene and acrylonitrile end-blocked with methacryloyl groups (Alon Macromonomer AN-6, a product by Toa Gosei Co.)
C-4500: polystyrene end-blocked with methacryloyl groups (Chemlink C-4500, a product by Sertomer Co.)

### Example A of preparation of adhesive composition

Into a four-necked flask of 500 ml capacity equipped with a reflux condenser, inlet tube for nitrogen gas, thermometer and stirrer blades were introduced 80 g of 2-ethylhexyl acrylate, 3 g of acrylic acid, 17 g of a copolymer of styrene and acrylonitrile end-blocked with methacryloyl groups (AN-6), 0.53 g of α,α′-azo-bis-isobutyronitrile and 230 g of ethyl acetate and, after agitation for 30 minutes at room temperature under a stream of nitrogen, the mixture was heated at 60°C and agitated for 24 hours to effect the copolymerization reaction.

The thus obtained solution of the copolymer had an excellent degree of tranparency and had a viscosity of 3000 centipoise and contained 35% by weight of the copolymer which had a weight-average molecular weight of 680,000.

Table 1 summarizes the formulation of the monomer mixture relative to the kind of the three monomers and respective amounts thereof in grams, viscosity and solid content of the copolymer solution obtained by the copolymerization reaction, weight-average molecular weight M̅w and glass transition temperature of the copolymer.

### Examples B,C and D of preparation of adhesive composition

The experimental procedure in each of these examples was substantially the same as in the previous example A except that the formulation of the monomer mixture in the copolymerization reaction was as shown in Table 1.

Table 1 also summarizes the characterization of the copolymer thus obtained.

### Comparative examples X and Y of preparation of adhesive composition

**Table 1**

| (Part 1) | | | | | |
|---|---|---|---|---|---|
| | | Example of Preparation of Adhesive Composition | | | |
| | | A | B | C | D |
| Monomers charged and composition thereof | 1st monomer (% by weight) | 2EHA (82) | 2EHA (75) | BA (73) | BA (68) |
| | 2nd monomer (% by weight) | AA (3) | AA (2) | AA (5) | HEMA (8) |
| | 3rd monomer (% by weight) | AN-6 (17) | C-4500 (23) | C-4500 (22) | AN-6 (24) |
| Copolymer solution | Viscosity (centipoise) | 3000 | 2500 | 2800 | 4400 |
| | Solid content (% by weight) | 35 | 40 | 30 | 23 |
| Copolymer | M̅w x 10⁻⁴ | 68 | 72 | 31 | 71 |
| | Glass transition temperature (°C) | -42 | -30 | -24 | -21 |

**Table 1**

| (Part 2) | | | |
|---|---|---|---|
| | | Comparative Example of Preparation of Adhesive Composition | |
| | | X | Y |
| Monomers charged and composition thereof | 1st monomer (% by weight) | BA (77) | 2EHA (85) |
| | 2nd monomer (% by weight) | --- | AA (15) |
| | 3rd monomer (% by weight) | AN-6 (23) | --- |
| Copolymer solution | Viscosity (centipoise) | 610 | 4500 |
| | Solid content (% by weight) | 30 | 30 |
| Copolymer | M̅w x 10⁻⁴ | 31 | 75 |
| | Glass transition temperature (°C) | -28 | -40 |

The experimental procedure in each of these examples was substantially the same as in the previous example A except that the formulation of the monomer mixture in the copolymerization reaction was as shown in Table 1.

Table 1 also summarizes the characterization of the copolymer thus obtained.

### Example 1

A hard coating material (Alonix, a product by Toa Gosei Co.) is applied to a surface of a polyester film of 25»m thickness (Lumilar, a product by Toray Co.) and then was hardened by irradiation of ultraviolet light to form a hard coating on the surface. A solution of an adhesive composition of Example A was applied to the other surface of the film, was dried by heating and a film having the hard coating and the adhesive layer was prepared. The film thus prepared was applied and bonded to a surface of a polycarbonate plate. The composite plate prepared here was aged in an accelerating condition of 80°C for 24 hours and then was evaluated about change of appearance and scratch resistance of the surface by brushing against steel wool for 500 times back and forth with the use of Abrasion Tester (Gakushin Model, manufactured by Toyo Seiki C.). Haze and gloss of the surface were evaluated by using Haze-meter and Gloss-meter, respectively, as described before. The results are shown in Table 2.

### Examples 2,3 and 4

The experimental procedure in each of these examples was substantially the same as in Example 1 except that adhesive compositions of Examples B, C and D were used for Examples 2, 3 and 4, respectively in place of the adhesive composition of Example A for Example 1. A composite polycarbonate plate having a hard coating and an adhesive layer was prepared in each Example, aged in the accelerating condition and evaluated in the same manner as described in Example 1. The results are shown in Table 2.

### Comparative example 1

The experimental procedure in this example was substantially the same as in Example 1 except that the adhesive composition of Example 1 was applied to a surface of a polyester film of 25»m thickness (Lumilar, a product by Toray Co.) having no hard coating on the other surface. The adhesive film thus prepared was applied and bonded to a surface of a polycarbonate plate and the resulting composite plate was aged in the accelerating condition and

**Table 2**

| | Example | | | | Comparative Example | | |
|---|---|---|---|---|---|---|---|
| | 1 | 2 | 3 | 4 | 1 | 2 | 3 |
| Adhesive composition | A | B | C | D | A | X | Y |
| Appearance | good | good | good | good | bad¹⁾ | bad²⁾ | bad²⁾ |
| Haze (%) | 3.0 | 4.2 | 3.7 | 3.4 | 32.4 | 20.2 | 36.3 |
| Gloss (G s (60°)) | Higher than 200 | Higher than 200 | Higher than 200 | Higher than 200 | 20 | Higher than 200 | Higher than 200 |

| | | | | | | | |
|---|---|---|---|---|---|---|---|
| ¹⁾ No change was observed in the adhesive layer. Numerous scratches were found on the surface. | | | | | | | |
| ²⁾ No change was observed on the surface. Numerous blisters were found in the adhesive layer. | | | | | | | |

evaluated in the same manner as described in Example 1. The results are shown in Table 2.

### Comparative examples 2 and 3

The experimental procedure in each of these examples was substantially the same as in Example 1 except that adhesive compositions of Examples X and Y, neither of which are included in the present invention, were used for Comparative examples 2 and 3, respectively in place of the adhesive composition of Example A for Example 1. A composite polycarbonate plate having hard coating and adhesive layer was prepared in each examples, aged in the accelerating condition and evaluated in the same manner as described in Example 1. The results are shown in Table 2.

As is clear from the results shown in the tables, the plastics plate of the present invention is outstandingly free from damages in appearance and retains excellent degree of haze and gloss even after the severe testing. On the other hand, the plastics plate of Comparative example 1, which has no hard coating on the surface of the face-stock film, exhibits a seriously large number of scratches and remarkable worsening in haze and, therefore, evidently lacks in the effect of the surface protection. The plastics plates of Comparative examples 2 and 3, in which the adhesive compositions not included in the present invention were applied, exhibit seriously remarkable occurrence of blisters in the adhesive layer and, accordingly, serious damage in transparency of the plate, though they exhibit few scratches on the surface.

### Example 5

A solution of the adhesive composition of Example A was applied to a surface of a polyester film deposited with aluminum and having total light transmission of 42 percent, haze of 4.7 percent and thickness of 25»m to form an adhesive layer of a thickness of 20»m and an adhesive polyester film having aluminum deposition was prepared. The thus prepared adhesive film was applied and bonded to a surface of a polycarbonate plate to prepare a composite plastics window pane material. The bonding in this window pane material showed a remarkably high adhesive bond strength of 420 g/25 mm after 24 hours of bonding. It also showed a holding power of 70,000 seconds without shearing.

The above prepared window pane material was aged in an accelerating condition of standing for 24 hours at 80°C and standing in a weatherometer for 100 hours, respectively. The results are shown in Table 3.

**Table 3**

| | | Example | | | | Comparative Example | |
|---|---|---|---|---|---|---|---|
| | | 5 | 6 | 7 | 8 | 4 | 5 |
| Adhesive composition | | A | B | C | D | X | Y |
| Aging test by standing at 80°C for 24 hours | Appearance | good | good | good | good | bad | bad |
| | Total light transmission (%) | 42 | 42 | 42 | 42 | 32 | 33 |
| | Haze (%) | 4.5 | 4.4 | 4.3 | 4.4 | 42.3 | 34.7 |
| Aging test by using weatherometer | Appearance | good | good | good | good | bad | bad |
| | Total light transmission (%) | 41 | 40 | 41 | 41 | 37 | 36 |
| | Haze (%) | 5.2 | 5.5 | 5.0 | 5.1 | 35.7 | 36.3 |

### Examples 6, 7, and 8 and Comparative examples 4 and 5

The experimental procedure in each of these examples was substantially the same as in Example 5 except that adhesive compositions of Examples B, C and D were used for Examples 6, 7 and 8, respectively, and adhesive compositions of Examples X and Y were used for Comparative examples 4 and 5, respectively, in place of the adhesive composition of Example A for Example 5. The adhesive compositions of Examples B, C and D are included in the present invention while the adhesive compositions of Examples X and Y are not included. A composite plastics window pane material was prepared in each example, aged in the accelerating condition and evaluated in the same manner as described in Example 5. The results are shown in Table 3.

### Example 9

A solution of the adhesive composition of Example A was applied to a surface of a polyester film which was colored bronzy by utilizing a dye stuff and having total light transmission of 33 percent, haze of 3.3 percent and thickness of 25 »m to form an adhesive layer of a thickness of 20 »m and a bronze-colored adhesive polyester film was prepared. The thus prepared adhesive film was applied and

**Table 4**

| | | Example | Comparative Example |
|---|---|---|---|
| | | 9 | 6 |
| Adhesive composition | | A | X |
| Aging test by standing at 80°C for 24 hours | Appearance | good | bad |
| | Total light transmission (%) | 33 | 28 |
| | Haze (%) | 3.4 | 20.1 |
| Aging test by using weatherometer | Appearance | good | bad |
| | Total light transmission (%) | 32 | 29 |
| | Haze (%) | 3.5 | 18.6 |

bonded to a surface of a poly(methyl methacrylate) plate to prepare a composite plastics window pane material. This window pane material was aged in an accelerating condition as described in Example 5. The results are shown in Table 4.

### Comparative example 6

The experimental procedure in this example was the same as in Example 9 except that the adhesive composition of Example X was used in place of the adhesive composition of Example A in Example 9. The thus prepared composite window pane material was aged as described in Example 9. The results are shown in Table 4.

As is clear from the results shown in the tables, the plastics window pane material of the present invention is outstandingly free from damages in appearance and retains excellent degree of transparency even after severe testing. On the other hand, the window pane materials of Comparative examples 4, 5 and 6, in which the adhesive compositions not included in the present invention were applied, exhibit seriously remarkable occurrence of blisters in the adhesive layer and, accordingly, serious damage in transparency of the plate and seeing through the pane materials was actually impossible.

To summarize the advantages obtained by the invention, a desired function can be furnished to a plastics plate material in a material-saving and efficient procedure because a thin film is treated at a surface or compounded with an additive according to the desired function while the bulk of the plastic plate is left unchanged and then the film and the bulk of the plate are combined through an adhesive layer. Physical properties of the plate such as strength are retained unchanged while the plate as a whole is furnished with the desired function.

For example, the adhesive face-stock film (B) + (C) having a hard coating on a surface can be easily applied and bonded to a surface of all kinds of plastics plates by utilizing a specified copolymer for the adhesive composition, can be bonded to the surface of the plate with remarkable strength and is free from damages of appearance and of adhesiveness caused by occurrence of blisters.
Thus, the plastic plate material of the present invention having the scratch resistance and excellent transparency and weatherability is efficiently and economically prepared.

The adhesive face-stock film (B) + (C) having the function of control of sun light transmission can be easily applied and bonded to a surface of a transparent plastics plate by utilizing a specified copolymer for the adhesive composition, can be bonded to the surface of the plate with remarkable strength and is free from damages of appearance and of adhesiveness caused by occurrence of blisters. Thus, the window pane material of the present invention having the function of control of sun light transmission and excellent transparency and weatherability is efficiently and economically prepared.

When an adhesive film having another function, such as electric conductivity, polarization of light, phase conversion of light and antistatic property, is utilized, a plastics plate material having said function can be prepared easily in the same way according to the invention.
A plastics plate material having a plurality of functions can also be prepared easily by utilizing a single adhesive film furnished with the plurality of functions.

## Claims

1. A plate material made of plastics which comprises
(A) a plastics base plate;
(B) a face-stock plastics film having the function of protecting the surface against scratches, which is prepared by finishing one surface with a coating material which is hardened by heat or by irradiation of ultraviolet light or electron beam; and
(C) a coating layer of a pressure-sensitive adhesive composition formed on the other surface of the face-stock film, the pressure-sensitive adhesive composition comprising, as the principal ingredient thereof, a copolymer having a weight-average molecular weight in the range from 150,000 to 2,000,000 and a glass transition temperature in the range from -60 °C to +60 °C and composed of (a) from 50 to 85 percent by weight of a first monomeric moiety of an acrylic ester, (b) from 1 to 30 percent by weight of a second monomeric moiety of an acrylic compound having a polar group in the molecular structure and (c) from 5 to 40 percent by weight of a third monomeric moiety of a macromonomer compound having a polymeric molecular chain and polymerizable functional group at the molecular chain end, the weight ratio of the second monomeric moiety to the third monomeric moiety being in the range from 0.02 to 6.

2. The plate material made of plastics as claimed in Claim 1, wherein the face-stock plastics film (B) is a film additionally having the function of selective transmission of light which is treated by a stretching process, a coloring process, a translucency process or a metallizing process.

3. The plate material of plastics as claimed in Claim 2, wherein the film additionally having the function of selective transmission of light is a film having the function of control of sun light transmission.

4. The plate material made of plastics as claimed in Claim 1, wherein the plastics base plate (A) is a polycarbonate resin plate, an acrylic resin plate or a polystyrene resin plate.

5. A window pane material made of plastics which comprises
(A) a plastics base window pane
(B) a face-stock plastics film having the function of protecting the surface against scratches, which is prepared by finishing one surface with a coating material which is hardened by heat or by irradiation of ultraviolet light or electron beam, and
(C) a coating layer of a pressure-sensitive adhesive composition formed on the other surface of the face-stock film, the pressure-sensitive adhesive composition comprising, as the principal ingredient thereof, a copolymer having a weight-average molecular weight in the range from 150,000 to 2,000,000 and a glass transition temperature in the range from -60 °C to +60 °C and composed of (a) from 50 to 85 percent by weight of a first monomeric moiety of an acrylic ester, (b) from 1 to 30 percent by weight of a second monomeric moiety of an acrylic compound having a polar group in the molecular structure and (c) from 5 to 40 percent by weight of a third monomeric moiety of a macromonomer compound having a polymeric molecular chain and polymerizable functional group at the molecular chain end, the weight ratio of the second monomeric moiety to the third monomeric moiety being in the range from 0.02 to 6.

6. The window pane material made of plastics as claimed in Claim 5, wherein the face-stock plastics film (B) is a film additionally having the function of selective transmission of light which is treated by a stretching process, a translucency process or a metallizing process.

7. The window pane material made of plastics as claimed in Claim 6, wherein the film additionally having the function of selective transmission of light is a film having the function of control of sun light transmission.

8. The window pane material made of plastics as claimed in Claim 5, wherein the plastics base window pane (A) is a polycarbonate resin plate, an acrylic resin plate or a polystyrene resin plate.

## Patentansprüche

1. Ein aus Kunststoff hergestelltes Plattenmaterial, welches umfaßt
(A) eine Kunststoffbasisplatte;
(B) einen Kunststoffbasisfilm mit der Funktion des Schutzes der Oberfläche gegen Kratzer, der hergestellt wird durch Beschichten einer Oberfläche mit einem Beschichtungsmaterial, das durch Wärme oder durch Bestrahlung mit ultraviolettem Licht oder Elektronenstrahlen gehärtet wird; und
(C) eine Überzugsschicht aus einer druckempfindlichen Klebeschicht, die auf der anderen Oberfläche des Basisfilms gebildet wird, wobei die druckempfindliche Klebstoffzusammensetzung als Hauptbestandteil davon umfaßt ein Copolymer mit einem gewichtsmittlerem Molekulargewicht im Bereich von 150 000 bis 2 000 000 und einer Glasübergangstemperatur im Bereich von -60°C bis +60°C, das aufgebaut ist aus (a) von 50 bis 85 Gew.-% einer ersten monomeren Einheit aus einem Acrylester, (b) von 1 bis 30 Gew.-% einer zweiten monomeren Einheit aus einer Acrylverbindung mit einer polaren Gruppe in der molekularen Struktur und (c) von 5 bis 40 Gew.-% einer dritten monomeren Einheit aus einer Makromonomerverbindung mit einer polymeren molekularen Kette und polymerisierbarer funktioneller Gruppe am Ende der molekularen Kette, wobei das Gewichtsverhältnis der zweiten monomeren Einheit zur dritten monomeren Einheit im Bereich von 0.02 bis 6 liegt.

2. Das aus Kunststoff hergestellte Plattenmaterial wie in Anspruch 1 beansprucht, wobei der Kunststoffbasisfilm (B) ein Film ist, der zusätzlich die Funktion der selektiven Lichttransmission hat, der durch einen Streckprozeß, einen Färbeprozeß, einen Transluzenz-Prozeß oder einen Metallisier-Prozeß behandelt wird.

3. Das aus Kunststoff hergestellte Plattenmaterial wie in Anspruch 2 beansprucht, wobei der Film mit der zusätzlichen Funktion der selektiven Lichttransmission ein Film mit der Funktion der Kontrolle der Sonnenlichttransmission ist.

4. Das aus Kunststoff hergestellte Plattenmaterial wie in Anspruch 1 beansprucht, wobei die Kunststoffbasisplatte (A) eine Polycarbonatharzplatte, eine Acrylharzplatte oder eine Polystyrolharzplatte ist.

5. Ein aus Kunststoff hergestelltes Fensterscheibenmaterial, das umfaßt
(A) eine Kunststoff-Basis-Fensterscheibe;
(B) einen Kunststoffbasisfilm mit der Funktion des Schutzes der Oberfläche gegen Kratzer, der hergestellt wird durch Beschichten einer Oberfläche mit einem Beschichtungsmaterial, das durch Wärme oder durch Bestrahlung mit ultraviolettem Licht oder Elektronenstrahlen gehärtet wird; und
(C) eine Überzugsschicht aus einer druckempfindlichen Klebeschicht, die auf der anderen Oberfläche des Basisfilms gebildet wird, wobei die druckempfindliche Klebstoffzusammensetzung als Hauptbestandteil davon umfaßt ein Copolymer mit einem gewichtsmittlerem Molekulargewicht im Bereich von 150 000 bis 2 000 000 und einer Glasübergangstemperatur im Bereich von -60°C bis +60°C, das aufgebaut ist aus (a) von 50 bis 85 Gew.-% einer ersten monomeren Einheit aus einem Acrylester, (b) von 1 bis 30 Gew.-% einer zweiten monomeren Einheit aus einer Acrylverbindung mit einer polaren Gruppe in der molekularen Struktur und (c) von 5 bis 40 Gew.-% einer dritten monomeren Einheit einer Makromonomerverbindung mit einer polymeren molekularen Kette und polymerisierbarer funktioneller Gruppe am Ende der molekularen Kette, wobei das Gewichtsverhältnis der zweiten monomeren Einheit zur dritten monomeren Einheit im Bereich von 0.02 bis 6 liegt.

6. Das aus Kunststoff hergestellte Fensterscheibenmaterial wie in Anspruch 5 beansprucht, wobei der Kunststoffbasisfilm (B) ein Film ist, der zusätzlich die Funktion der selektiven Lichttransmission hat, der durch einen Streckprozeß, einen Färbeprozeß, einen Transluzenz-Prozeß oder einen Metallisier-Prozeß behandelt wird.

7. Das aus Kunststoff hergestellte Fensterscheibenmaterial wie in Anspruch 6 beansprucht, wobei der Film mit der zusätzlichen Funktion der selektiven Lichttransmission ein Film mit der Funktion der Kontrolle der Sonnenlichttransmission ist.

8. Das aus Kunststoff hergestellte Fensterscheibenmaterial wie in Anspruch 5 beansprucht, wobei die Kunststoffbasisfensterscheibe (A) eine Polycarbonatharzplatte, eine Acrylharzplatte oder eine Polystyrolharzplatte ist.

## Revendications

1. Matériau en plaque en matière plastique qui comprend
(A) une plaque de base en matière plastique ;
(B) un film en matière plastique à surface traitée ayant la fonction de protéger la surface des rayures qu'on prépare en traitant une face avec un matériau de revêt-ment qui est durci à la chaleur ou par irradiation à la lumière ultraviolette ou un faisceau électronique ; et
(C) une couche de revêtement d'une composition adhésive sensible à la pression formée sur une autre face du film à surface traitée, la composition adhésive sensible à la pression comprenant, comme principal ingrédient, un copolymère ayant un poids moléculaire moyen en poids compris entre 150 000 et 2 000 000 et une température de transition vitreuse comprise entre -60°C et +60°C et composée de (a) de 50 à 85% en poids d'un premier radical monomère d'un ester acrylique, (b) de 1 à 30% en poids d'un second radical monomère d'un composé acrylique ayant un groupe polaire dans la structure moléculaire et (c) de 5 à 40% en poids d'un troisième radical monomère d'un composé macromère ayant une chaîne moléculaire polymère et un groupe fonctionnel polymérisable à l'extrémité de la chaîne moléculaire, la proportion pondéral du second radical monomère au troisième radical monomère étant comprise dans l'intervalle de 0,02 à 6.

2. Matériau en plaque en matière plastique tel que revendiqué dans la revendication 1, dans lequel le film de matière plastique à surface traitée (B) est un film qui possède en plus la fonction de transmettre sélectivement la lumière qu'on traite par un procédé d'étirage, un procédé de coloration, un procédé pour le rendre translucide ou métallisé.

3. Matériau en plaque en matière plastique selon la revendication 2, dans lequel le film qui possède en plus la fonction de transmission sélective de la lumière est un film qui a la fonction de maîtrise de la transmission de la lumière solaire.

4. Matériau en plaque en matière plastique selon la revendication 1, dans lequel la plaque de base en matière plastique(A) est une plaque en résine polycarbonate, une plaque en résine acrylique, ou une plaque en résine polystyrène.

5. Matériau de carreau de fenêtre en matière plastique qui comprend
(A) un carreau de fenêtre de base en matière plastique
(B) un film en matière plastique à surface traitée ayant la fonction de protéger la surface des rayures qu'on prépare en traitant une face avec un matériau de revêtement qui est durci à la chaleur ou par irradiation à la lumière ultraviolette ou un faisceau électronique ; et
(C) une couche de revêtement d'une composition adhésive sensible à la pression formée sur une autre face du film à surface traitée, la composition adhésive sensible à la pression comprenant, comme principal ingrédient, un copolymère ayant un poids moléculaire moyen en poids compris entre 150 000 et 2 000 000 et une température de transition vitreuse comprise entre -60°C et +60°C et composée de (a) de 50 à 85% en poids d'un premier radical monomère d'un ester acrylique, (b) de 1 à 30% en poids d'un second radical monomère d'un composé acrylique ayant un groupe polaire dans la structure moléculaire et (c) de 5 à 40% en poids d'un troisième radical monomère d'un compose macromère ayant une chaîne moléculaire polymère et un groupe fonctionnel polymérisable à l'extrémité de la chaîne moléculaire, la proportion pondéral du second radical monomère au troisième radical monomère étant comprise dans l'intervalle de 0,02 à 6.

6. Matériau de carreau de fenêtre en matière plastique selon la revendication 5, dans lequel le film (B) à surface traitée en matière plastique est un film qui a en plus la fonction de transmettre sélectivement la lumière qu'on a traité par un procédé d'étirage, un procédé qui le rend translucide ou un procédé de métallisation.

7. Matériau de carreau de fenêtre en matière plastique selon la revendication 6, dans lequel le film qui a en plus la fonction de transmettre sélectivement la lumière est un film qui a la fonction de maîtrise de la transmission de la lumière solaire.

8. Matériau de carreau de fenêtre en matière plastique selon la revendication 5, dans lequel le carreau de fenêtre de base en matière plastique (A) est une plaque de résine polycarbonate, une plaque de résine acrylique ou une plaque de résine polystyrène.
